# EUROPEAN PATENT SPECIFICATION

(11) **EP 4 109 105 B1**
(45) Date of publication and mention of the grant of the patent: **31.12.2025**
(21) Application number: 21756866.6
(22) Date of filing: 18.01.2021
(51) Int. Cl.: G01N 35/00, G01N 35/02

(54) **AUTOMATIC ANALYSIS DEVICE**
AUTOMATISCHE ANALYSEVORRICHTUNG
DISPOSITIF D'ANALYSE AUTOMATIQUE

(30) Priority: 21.02.2020 JP 2020028023
(43) Date of publication of application: 28.12.2022
(73) Proprietor: Hitachi High-Tech Corporation, Minato-ku Tokyo 105-6409 (JP)
(72) Inventor: INAGAKI, Erika, Tokyo 105-6409 (JP); YAMANO, Teruhiro, Tokyo 105-6409 (JP); SUZUKI, Yoichiro, Tokyo 105-6409 (JP)
(74) Representative: Strehl & Partner mbB
(86) International application number: PCT/JP2021/001424
(87) International publication number: WO 2021/166512

(56) References cited:
- WO-A1-2019/031451
- WO-A1-2019/031451
- CN-A- 103 675 302
- JP-A- 2005 037 171
- JP-A- 2005 214 683
- JP-A- 2014 048 166
- JP-A- 2014 145 677
- US-A1- 2005 175 503
- US-A1- 2008 011 106
- US-A1- 2011 020 948
- US-A1- 2014 356 233
- US-A1- 2018 246 132

## Description

### [Technical Field]

The present invention relates to an automatic analyzer implementing qualitative and quantitative analysis for a biological body specimen such as a blood serum and urine (will be hereinafter referred to as a sample).

### [Background Art]

In Patent Literature 1, there is described that an automatic analyzer includes: a reagent mounting unit in which a plurality of reagent bottles are installed when a reagent bottle is loaded into the automatic analyzer; a reagent conveying mechanism including a gripper mechanism; and a reagent mounting mechanism for moving the reagent mounting unit between an installation position at which an operator installs the reagent bottle in the reagent mounting unit and a position at which the gripper mechanism grips the reagent bottle.
Further related art is disclosed in CN 103 675 302 A, US 2005/175503 A1, WO 2019/031451 A1, US 2014/356233 A1, US 2011/020948 A1, US 2018/246132 A1 and US 2008/011106 A1.

### [Citation List]

### [Patent Literature]

**[Patent Literature 1]** WO2017/038546

### [Summary of Invention]

### [Technical Problem]

With respect to an automatic analyzer such as a biochemical automatic analyzer and an immunological automatic analyzer, it is required to arrange various consumables within the analyzer, the various consumables being used for implementing analysis such as a reagent according to the measurement item of a sample of a patient.

The consumables arranged in an automatic analyzer reduce by implementing analysis. Therefore, when analysis is implemented continuously over a long time, it is possible to cause a shortage of the consumables during the analysis. Particularly, with respect to a large automatic analyzer with high throughput, the consumption amount of the consumables also becomes large.

In this regard, as an example of a technology for loading a reagent into the apparatus without reducing a throughput of an automatic analyzer during analysis, Patent Literature 1 can be cited.

In Patent Literature 1, it is described that, by arranging the operation range of a reagent autoloader mechanism concentrically to the upper portion of a reagent disk, a new reagent is loaded to the reagent disk before the remaining amount of the reagent arranged within the reagent disk of the apparatus becomes small suppressing delay of the analysis to the minimum even when the apparatus is analyzing a sample of a patient.

According to the technology described in Patent Literature 1, when a reagent is to be loaded during an analysis, since the moving time of a vertical operation of the gripper mechanism only has to be secured, only one cycle can be devoted to an operation for loading the reagent to the reagent disk.

Here, with respect to many items to be analyzed by an automatic analyzer, reagents of two kinds or more are used. In other words, it is revealed that, when an analysis operation is stopped by one cycle for loading a reagent as the technology described in Patent Literature 1, a dispensing operation of the second regent also stops after a certain period of time, and the timing becomes an unnecessary empty cycle, and it is revealed that there is a room for improvement.

Also, it is revealed that Patent Literature 1 does not mention on replacement of a consumable other than a reagent and there is also a room for improvement with respect to replenishment of a consumable other than a reagent.

The object of the present invention is to provide an automatic analyzer capable of solving the problem of the prior art described above and suppressing occurrence of an unnecessary empty cycle caused when plural consumables are replaced during analysis compared to a prior art.

### [Solution to Problem]

The present invention proposes an automatic analyzer according to claim 1 for solving the problem described above.

### [Advantageous Effects of Invention]

According to the present invention, occurrence of an unnecessary empty cycle caused when plural consumables are replaced during analysis can be suppressed compared to a prior art. Problems, configurations, and effects other than those described above will be clarified by explanation of embodiments described below.

### Brief Description of the Drawings

Fig. 1 is a top view of an automatic analyzer of a first embodiment of the present invention.
Fig. 2 is a time chart view in which in the automatic analyzer of the first embodiment, a reagent container is loaded when a reagent container can be loaded in one cycle.
Fig. 3 is a time chart view in which in the automatic analyzer of the first embodiment, a reagent container is loaded when a reagent container can be loaded in two cycles.
Fig. 4 is a view illustrating an analysis plan in the automatic analyzer of the first embodiment.
Fig. 5 is a view illustrating a scheduling method of reagent dispensing mechanisms in the automatic analyzer of the first embodiment.
Fig. 6 is a view illustrating a scheduling method of the reagent dispensing mechanisms in the automatic analyzer of the first embodiment.
Fig. 7 is a view illustrating a scheduling method of the reagent dispensing mechanisms in the automatic analyzer of the first embodiment.
Fig. 8 is a flowchart in which in the automatic analyzer of the first embodiment, mechanisms are reserved when two reagent containers are loaded.
Fig. 9 is a flowchart in which in the automatic analyzer of the first embodiment, mechanisms are reserved when any number of reagent containers are loaded.
Fig. 10 is a flowchart in which in an automatic analyzer of a second embodiment of the present invention, mechanisms are reserved when any number of reagent containers are loaded.
Fig. 11 is a flowchart in which in an automatic analyzer of a third embodiment of the present invention, mechanisms are reserved when any number of reagent containers are loaded.
Fig. 12 is a view illustrating a scheduling method of a reagent dispensing mechanism in the automatic analyzer of the third embodiment.
Fig. 13 is a view illustrating a scheduling method of reagent dispensing mechanisms in an automatic analyzer of a fourth embodiment of the present invention.
Fig. 14 is a time chart view in which loading and unloading of reagent containers are performed as a set, which are illustrated in a fifth embodiment of the present invention.
Fig. 15 is a top view of an automatic analyzer of a sixth embodiment of the present invention.

### Description of Embodiments

Hereinafter, an automatic analyzer according to an embodiment of the present invention will be described referring to the drawings.

### <First Embodiment>

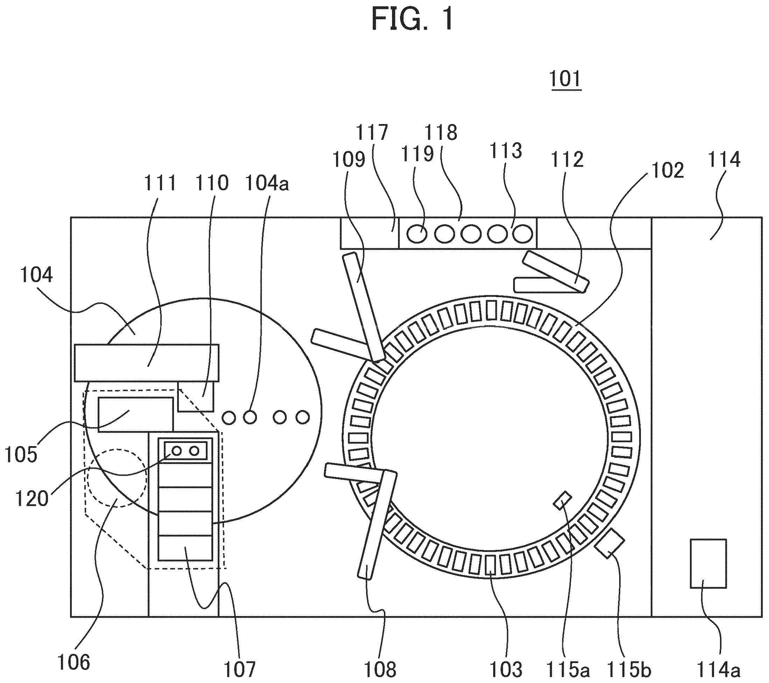

The first embodiment of the automatic analyzer of the present invention will be explained using Fig. 1 to Fig. 9.

First, an overall configuration of the automatic analyzer will be explained using Fig. 1. Fig. 1 is a top view of an automatic analyzer to which the present invention is applied.

An automatic analyzer 101 illustrated in Fig. 1 is an apparatus that dispenses a sample and a reagent respectively to plural reaction containers 103 for reaction, measures liquid obtained by the reaction, and includes a reaction disk 102, a reagent disk 104, a sample conveyance mechanism 117, a first reagent dispensing mechanism 108, a second reagent dispensing mechanism 109, a sample dispensing mechanism 112, an autoloader mechanism, a light source 115a, a spectrophotometer 115b, a washing mechanism (illustration is omitted), a stirring mechanism (illustration is omitted), a washing tank (illustration is omitted), and a control unit 114.

The reaction containers 103 are arrayed on the circumference in the reaction disk 102 and rotate constantly at a constant angle during analysis, and the reaction containers 103 are moved by the rotation to various positions such as a sample dispensing position, a reagent dispensing position, and a photometry position.

In the vicinity of the reaction disk 102, the sample conveyance mechanism 117 is disposed, the sample conveyance mechanism 117 moving a rack 118, a sample container 119 being mounted on the rack 118. Also, it is possible to use other methods such as a method where an operator manually arranges the rack 118 without using the sample conveyance mechanism 117.

The sample dispensing mechanism 112 capable of rotation and vertical motion is disposed between the reaction disk 102 and the sample conveyance mechanism 117. The sample dispensing mechanism 112 moves along a trajectory of an arc around the rotation axis, and dispenses the sample from the sample container 119 to the reaction disk 103.

The reagent disk 104 is a depository capable of mounting the plural reagent containers 120 on the circumference, the reagent container 120 storing therein a reagent used for analysis, and moves an optional reagent to a reagent aspiration position by rotation. The reagent disk 104 is cooled, and is covered by a cover that includes an aspiration port 104a and an input port 105, the aspiration port 104a allowing the first reagent dispensing mechanism 108 and the second reagent dispensing mechanism 109 to access the reagent disk 104 when a reagent is dispensed to the reaction container 103, the input port 105 being for loading the reagent container 120 into the reagent disk 104.

The first reagent dispensing mechanism 108 and the second reagent dispensing mechanism 109 capable of rotation and vertical motion are disposed between the reaction disk 102 and the reagent disk 104. The first reagent dispensing mechanism 108 and the second reagent dispensing mechanism 109 move along a trajectory of an arc around the rotation axis, access the inside of the reagent disk 104 from the aspiration port 104a, and dispense the reagent from the reagent container 120 to the reaction container 103. These first reagent dispensing mechanism 108 and second reagent dispensing mechanism 109 are configured to be capable of simultaneously accessing the reagent disk 104.

Around the reaction disk 102, the washing mechanism, the light source 115a, the spectrophotometer 115b, and the stirring mechanism are further disposed. Also, the washing tanks are disposed respectively within the operation range of the first reagent dispensing mechanism 108, the second reagent dispensing mechanism 109, the sample dispensing mechanism 112, and the stirring mechanism.

The control unit 114 is configured of a computer and the like connected to respective mechanisms described above, implements control of creating a plan for operating each device in the automatic analyzer 101 in order to operate the each device, and implements a calculation process of obtaining concentration of a predetermined component in a liquid sample such as blood and urine. The control unit 114 of the present embodiment includes a display unit 114a displaying the state of the automatic analyzer 101.

Also, the control unit 114 of the present embodiment performs control of causing a plan of dispensing operations of the first reagent dispensing mechanism 108 and the second reagent dispensing mechanism 109 to be stopped in order to load or unload, during analysis, one of the reagents into or from the reagent disk 104 and causing another reagent to be loaded or unloaded into or from the reagent disk 104 at a timing at which an operation of the second reagent dispensing mechanism 109 is stopped, the timing inevitably occurring after the stop of the plan for operating the first reagent dispensing mechanism 108. The detail of this control will be described below.

Also, the control unit 114 of the present embodiment performs control of causing the display unit 114a to display the time required until completion of conveyance of all consumables requested by an operator.

The autoloader mechanism is disposed in the upper portion of the reagent disk 104, and includes a reagent conveyance mechanism 111, a reagent gripping mechanism 110, and the like.

The input port 105 is a cover for not releasing the cold air inside the reagent disk 104 having been cooled, and is in a closed state normally. When the reagent gripping mechanism 110 is to access the reagent disk 104, the input port 105 opens and operates so as to be capable of implementing loading and unloading the reagent container 120 into and from the reagent disk 104.

A reagent tray 107 is a portion for disposing the reagent container 120 when an operator loads the reagent container 120 into the reagent disk 104 of the automatic analyzer 101 or a portion where the reagent container 120 unloaded from the reagent disk 104 is disposed, and is constructed to be capable of disposing the plural reagent containers 120 by plural sets linearly in Fig. 1. The reagent tray 107 is not limited to one having a tray shape, and the shape thereof is not limited particularly as far as the reagent container 120 can be disposed thereon such as a disk type, a type of a shelf with a door, and so on.

The reagent conveyance mechanism 111 is disposed in the upper portion of the reagent disk 104, and moves in the vertical direction of the drawing in Fig. 1. The reagent gripping mechanism 110 is disposed in the reagent conveyance mechanism 111, and the reagent gripping mechanism 110 moves in the vertical direction of the drawing and in the left-right direction of the drawing along the longitudinal direction of the reagent conveyance mechanism 111 in Fig. 1. By these reagent gripping mechanism 110 and reagent conveyance mechanism 111, the reagent container 120 is conveyed automatically to either of the reagent disk 104 or the reagent tray 107.

The above is a configuration of the automatic analyzer 101 of the present embodiment.

In the present embodiment, a reagent is cited as an example of a consumable. In this case, a storage unit storing a consumable used for measurement of a sample is configured of the reagent disk 104 and the reagent tray 107, and the first reagent dispensing mechanism 108 dispensing the first reagent (will be hereinafter described as R1) out of the reagent and the second reagent dispensing mechanism 109 dispensing the second reagent (will be hereinafter described as R2) correspond to a device accessing the reagent disk 104. Also, the first reagent dispensing mechanism 108 is equivalent to the first dispensing unit, and the second reagent dispensing mechanism 109 is equivalent to the second dispensing unit.

Also, with respect to the configuration of the automatic analyzer, although a case of an automatic analyzer of one system including one set only of the reagent disk 104 as illustrated in Fig. 1 was exemplified, the present invention is also applicable to an automatic analyzer of two systems including two sets of the reagent disk and including dispensing mechanisms dedicated to respective reagent disks and three systems or more irrespective of presence and absence of interference of the reagent dispensing mechanism and the autoloader mechanism as far as the automatic analyzer has such mechanism that, in loading the reagent container 120 into one reagent disk, a reagent dispensing mechanism of the other disk does not interfere.

Also, the present invention is not limited to one implementing analysis of a biochemical analysis item, and can be an analyzer implementing analysis of another analysis item such as an immunological analyzer implementing analysis of an immunological analysis item. Further, with respect to a biochemical analyzer also, the present invention is not limited to an aspect illustrated in Fig. 1, can be one where a variety of each mechanism is added or deleted appropriately, can be one separately mounting an analysis device measuring another analysis item namely electrolyte for example, and can be one where the number of piece of each mechanism illustrated in Fig. 1 is changed appropriately.

Also, an automatic analyzer is not limited to an aspect having such single analysis module configuration as illustrated in Fig. 1, and can have a configuration where two pieces or more various analysis modules and preprocessing modules are connected by a convey device, the analysis module being capable of measuring same or different analysis items, the preprocessing module implementing preprocessing.

The analysis process of an inspection sample by the automatic analyzer 101 as described above is implemented generally in an order described below.

First, a sample in the sample container 119 mounted on the rack 118 conveyed to a sample aspiration position 113 by the sample conveyance mechanism 117 is dispensed to the reaction container 103 on the reaction disk 102 by the sample dispensing mechanism 112.

When a sample is discharged to the reaction container 103, a timing at which the reaction disk 102 stops so that the reaction container in question meets the discharge position of the first reagent dispensing mechanism 108 after a certain period of time. At this timing, the first regent used for analysis is dispensed by the first reagent dispensing mechanism 108 from the reagent container 120 on the reagent disk 104 to the reaction container 103 to which the sample has been dispensed before. Next, stirring of a mixed solution of the sample and the reagent in the reaction container 103 is implemented by the stirring mechanism.

After the certain period of time, according to the necessity, R2 is dispensed by the second reagent dispensing mechanism 109 from the reagent container 120 on the reagent disk 104 to the reaction container 103 to which the first agent has been dispensed before.

In a cycle during these sequential dispensing operations, photometry is implemented at every cycle, the photometry causing a light generated by the light source 115a to pass through the reaction container 103 containing the mixed solution and measuring luminosity of the transmitted light by the spectrophotometer 115b. Here, according to the present invention, one cycle is made an interval between the photometry and photometry.

Thereafter, the luminosity measured by the spectrophotometer 115b is transmitted to the control unit 114 through an A/D converter and an interface. Also, calculation is implemented by the control unit 114, concentration of a predetermined component in a liquid sample such as blood and urine is obtained, and the result is displayed on the display unit 114a and the like or recorded in a recording device.

Also, when all reactions finish, a reaction solution in the reaction container 103 is removed by the washing mechanism, and washing is implemented. When washing is completed, the reaction container 103 in question is used for analysis again.

A procedure for implementing conveyance of the reagent container 120 during analysis by this apparatus will be hereinafter explained.

As described above, there exists the input port 105 in the reagent disk 104, and the input port 105 is normally closed by a shutter. The shutter can be any openable and closable mechanism such as a slide type door, a single swing door, a double door, and the like.

When a reagent loading request is received, the autoloader mechanism grips the reagent container 120 placed on the reagent tray 107, and moves to a standby position 106. When the reagent disk 104 and the reagent dispensing mechanism stop, the shutter of the input port 105 opens, and the autoloader mechanism stores the reagent container 120 to the inside of the reagent disk 104. Thereafter, when the autoloader mechanism returns to the standby position, the first reagent dispensing mechanism 108 and the second reagent dispensing mechanism 109 restart operation.

According to the present embodiment, the autoloader mechanism has such layout of not interfering at all with the second reagent dispensing mechanism 109. Also, the autoloader mechanism and the first reagent dispensing mechanism 108 are disposed so as not to interfere with each other while the autoloader mechanism moves from the reagent tray 107 to the standby position 106.

Although a suppressing effect against drop of the throughput by the present invention is higher when the autoloader mechanism and the first reagent dispensing mechanism 108 and the second reagent dispensing mechanism 109 are constructed so as not to interfere with each other, it is not necessarily required to have such construction of not interfering with each other. When such interference may occur, it can be dealt with by stopping the first reagent dispensing mechanism 108 and the second reagent dispensing mechanism 109 even while both mechanisms interfere with each other in a time period other than the time required for loading.

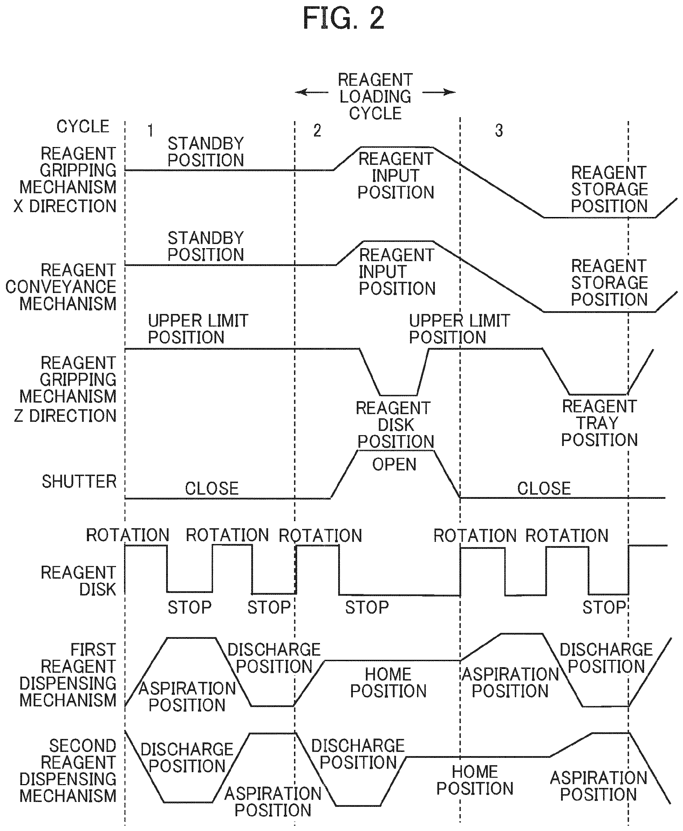

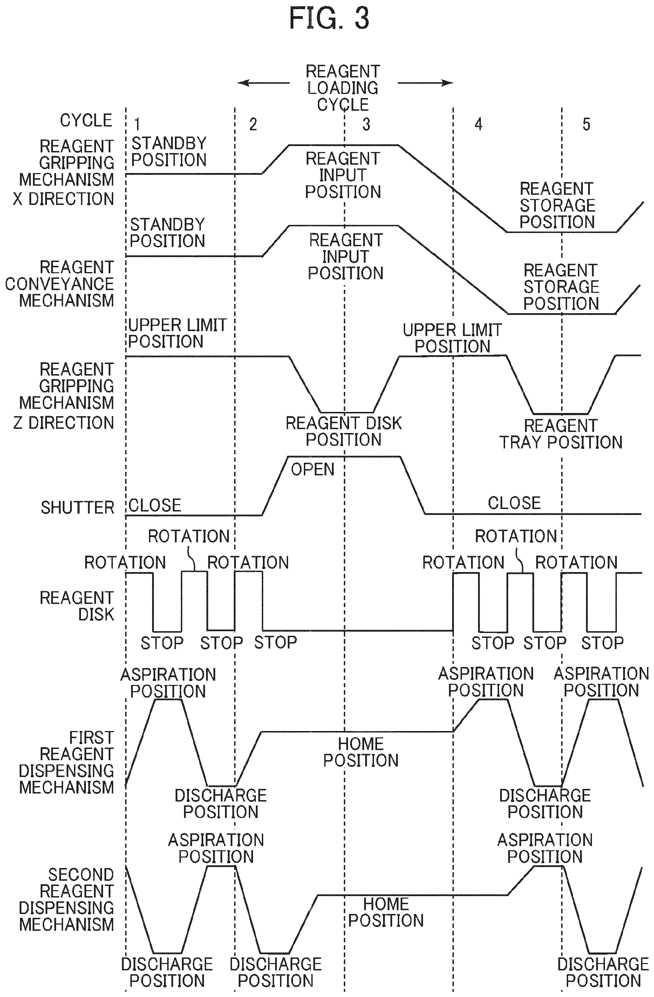

A time chart in loading the reagent container 120 into the reagent disk 104 during analysis in the present embodiment will be explained using Fig. 2 and Fig. 3. Fig. 2 is a time chart view in which, in the automatic analyzer of the first embodiment, a reagent container can be loaded in one cycle, and Fig. 3 is a time chart view in which a reagent container can be loaded in two cycles.

In the present embodiment, the time incurred for the first reagent dispensing mechanism 108 and the second reagent dispensing mechanism 109 to implement aspiration and discharging of a reagent is one cycle. Here, the home position in Fig. 2 means a position of stopping when the apparatus is in a standby state of not implementing analysis.

Explanation will be hereinafter made on operation of the autoloader mechanism after loading the reagent container 120 to the reagent disk 104 from the standby position 106 until returning again to the position of the reagent tray 107 when the cycle incurred for loading is one cycle.

The first cycle is for normal analysis operation, and the first reagent dispensing mechanism 108 aspirates the reagent stored in the reagent disk 104, moves to a position for implementing discharging, discharges the reagent to the reaction container 103, and returns to the home. The second reagent dispensing mechanism 109 discharges the reagent to the reaction container 103, moves the next reagent to the aspiration position of the reagent disk 104, and implements aspiration of the reagent.

At this time, since the reagent disk 104 is accessed for aspiration of two kinds of the reagent, two times of rotation are implemented in one cycle so that the first reagent dispensing mechanism 108 matches the position of the reagent to be aspirated to the aspiration port 104a in the first half of the cycle and that the second reagent dispensing mechanism 109 matches the position of the reagent to be aspirated to the aspiration port 104a in the latter half of the cycle. The autoloader mechanism stops at the standby position 106 in a state of gripping the reagent container 120 to be loaded.

The second cycle is for reagent loading operation, and the first reagent dispensing mechanism 108 and the second reagent dispensing mechanism 109 do not access the reagent disk 104. Also, since the second reagent dispensing mechanism 109 does not interfere with the autoloader mechanism, it is possible to implement operation of discharging the reagent to the reaction container 103 that has aspirated the reagent already in the previous first cycle.

The reagent disk 104 rotates so that the position for disposing the reagent container 120 to be loaded matches the input port 105, and opens the shutter after the rotation stops. During this operation, the reagent conveyance mechanism 111 moves to the upper portion of the input port 105. When the shutter fully opens, the reagent gripping mechanism 110 descends, and the reagent container 120 is disposed on the reagent disk 104. When the reagent gripping mechanism 110 returns to the position before the descending, the reagent conveyance mechanism 111 moves to the standby position 106. The shutter closes during that time.

In the third cycle, analysis is restarted. The first reagent dispensing mechanism 108 moves to the reagent aspiration position on the reagent disk 104 in order to aspirate the reagent. In parallel, the reagent disk 104 rotates, and the reagent to be aspirated moves to the aspiration position. When reagent aspiration of the first reagent dispensing mechanism 108 is completed, the reagent disk 104 rotates again, and the reagent to be dispensed by the second reagent dispensing mechanism 109 moves to the aspiration position. The second reagent dispensing mechanism 109 moves to the aspiration position and implements reagent aspiration operation in the latter half of this cycle. The reagent conveyance mechanism 111 moves from the standby position to the home position.

Here, the premised condition will be supplemented. When the autoloader mechanism is constructed to interfere with the second reagent dispensing mechanism 109 while moving from the standby position 106 to the input port 105, it is dealt with by implementing such scheduling that the second reagent dispensing mechanism 109 returns to the home without implementing aspiration operation in the latter half of the first cycle.

When the autoloader mechanism is constructed to be incapable of moving to the standby position before the second cycle finishes, it is dealt with by implementing such scheduling of not implementing operation of the first reagent dispensing mechanism 108 in the first half of the third cycle.

That is to say, the present invention is applicable irrespective of presence and absence of interference between the first reagent dispensing mechanism 108, the second reagent dispensing mechanism 109 and the autoloader mechanism.

Even when the time incurred for replacement of the reagent container 120 is two cycles or more, loading is possible by a similar method. A time chart of a case of implementing loading in two cycles will be illustrated in Fig. 3.

Fig. 3 illustrates an aspect where the time until the autoloader mechanism loads the reagent container 120 into the reagent disk 104 is long assuming a case that operation of the autoloader mechanism is slow in contrast to operation of the dispensing mechanism.

The present invention is also applicable to a case other than the aspect illustrated in Fig. 3 which is, for example, such case that the standby position 106 can be arranged only at a position far from the reagent disk 104 due to interference with the first reagent dispensing mechanism 108 and it takes time for transportation by the autoloader mechanism from the standby position 106 to the input port 105.

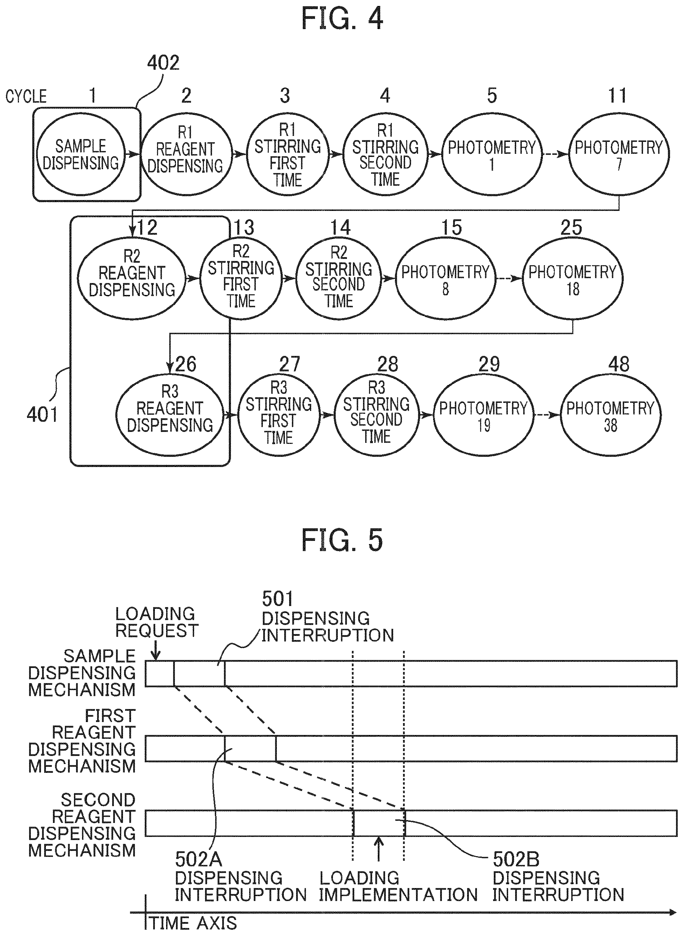

Next, detail of the scheduling method of loading and unloading of the reagent container 120 in the automatic analyzer of the present invention will be hereinafter explained using Fig. 4 and onward. Fig. 4 is a view illustrating an analysis plan.

The automatic analyzer 101 of the present first embodiment is a biochemical automatic analyzer implementing photometry regularly. As illustrated in Fig. 4, photometry timing and each reagent dispensing timing have been determined by the control unit 114, and it is required to implement reagent dispensing at a timing having been set without fail when sample dispensing is implemented.

That is to say, when it is intended to stop the first reagent dispensing mechanism 108 and the second reagent dispensing mechanism 109 in the cycle of the timing 401 illustrated in Fig. 4, it is required to interrupt sample dispensing implemented at the timing 402 in advance.

Thus, in the sample dispensing plan, it is desirous to implement scheduling after referring to the operation state of the reagent dispensing mechanism and confirming that reagent dispensing required in implementing sample dispensing is possible. By reserving an operation plan by such scheduling method, it is possible to implement a plan so that sample dispensing thereafter does not overlap with the loading operation.

Also, with respect to the automatic analyzer, there are various analysis methods according to the analysis item and the manufacturer, the scheduling described above is only an example, and the detail is not particularly limited as long as an automatic analyzer implementing analysis using two kinds or more of the reagent.

When the reagent is to be conveyed by the reagent gripping mechanism 110 and the reagent conveyance mechanism 111 during analysis of a sample, the control unit 114 of the present embodiment stops operation of the device that accesses the storage unit based on operation of such various mechanisms. In addition, operation of the reagent gripping mechanism 110 and the reagent conveyance mechanism 111 is planned so as to convey the reagent also at a timing at which an operation of the device is stopped, the timing inevitably occurring after the former stop. Explanation will be hereinafter made on the detail of the planning method using Fig. 5 to Fig. 7. Fig. 5 to Fig. 7 are vies illustrating a scheduling method of reagent dispensing mechanisms.

When a loading request for the reagent container 120 is received, as illustrated in Fig. 5, the control unit 114 interrupts the cycle 501 of sample dispensing immediately thereafter. By this interruption of sample dispensing, dispensing of R1 becomes unnecessary in the cycle 502A that was a timing for dispensing R1 to the sample in question, and therefore reservation to stop operation of the first reagent dispensing mechanism 108 is implemented. In a similar manner, reservation to stop operation of the second reagent dispensing mechanism 109 is implemented with respect to the cycle 502B that was a timing for dispensing R2 to the sample in question.

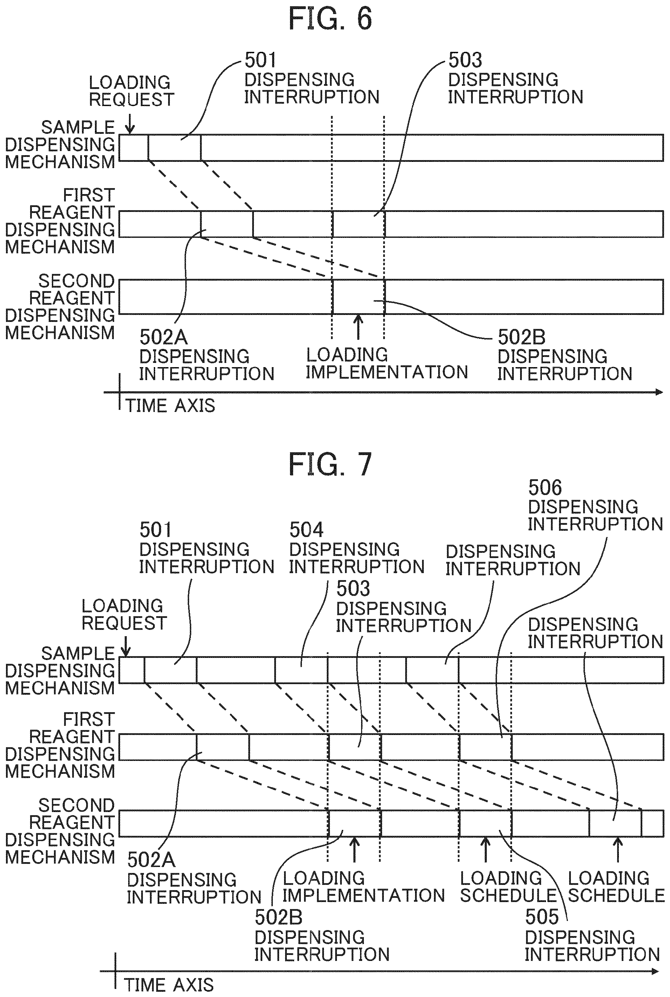

By reservation of stopping operation with respect to the cycle 502B described above (=loading operation for the reagent container 120), it is required to stop rotation operation of the reagent disk 104 as well at the timing of the cycle 502B. Therefore, it is required to inevitably stop dispensing operation by the first reagent dispensing mechanism 108 also at a timing same to the cycle 502B. Accordingly, as illustrated in Fig. 6, the control unit 114 implements operation reservation for stopping the first reagent dispensing mechanism 108 with respect to the cycle 503.

By this operation stop of the first reagent dispensing mechanism 108 in the cycle 503, as illustrated in Fig. 7, sample dispensing corresponding to the cycle 503 also becomes unnecessary, and therefore reservation to stop operation of the sample dispensing mechanism 112 in the cycle 504 is also implemented. The control unit 114 implements scheduling of sample dispensing so as not to implement sample dispensing in the cycles 501, 504 but to restart a sample dispensing plan from the next cycle.

Also, by the cycle 504 of sample dispensing interrupted for stopping the first reagent dispensing mechanism 108 in the cycle 503, as illustrated in Fig. 7, the cycle 505 at which the second reagent dispensing mechanism 109 stops inevitably occurs.

Operation reservation of the autoloader mechanism is implemented making this cycle 505 a timing at which the second reagent container 120 is loaded, and operation reservation for loading the second reagent container 120 is completed.

When there exists further the reagent container 120 to be loaded, based on reservation of stop operation with respect to the cycle 505, operation reservation for stopping the first reagent dispensing mechanism 108 is implemented further with respect to the cycle 506. By this stop operation reservation of the cycle 506, in a similar manner, a timing at which operation of the sample dispensing mechanism 112 and the second reagent dispensing mechanism 109 is stopped thereafter occurs inevitably. Using this timing having occurred inevitably, loading operation for the reagent container 120 of the third and onward can be reserved.

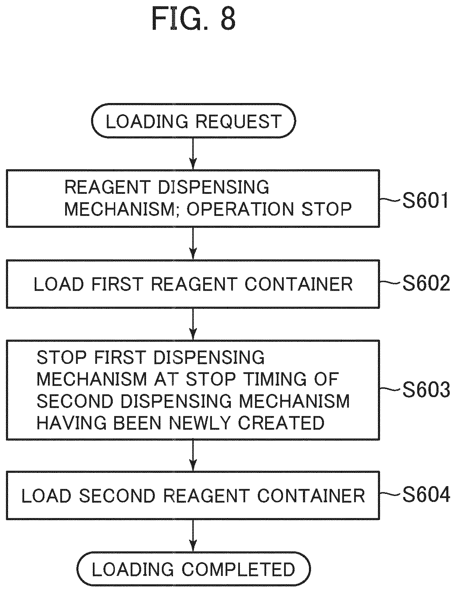

Actual loading operation will be explained using Fig. 8. Fig. 8 is a flowchart in which mechanisms are reserved when two reagent containers are loaded.

When a loading request is received, operation of the first reagent dispensing mechanism 108 and the second reagent dispensing mechanism 109 stops at a timing of the cycles 502A, 502B having been reserved (step S601).

Therefore, the first reagent container 120 is loaded at the timing (step S602).

As described above, by loading operation in the former step S602, the first reagent dispensing mechanism 108 is stopped in the cycle 503 (step S603). By this stopping of the first reagent dispensing mechanism 108 in the step S603, the second reagent dispensing mechanism 109 also stops in the cycle 505, therefore the second reagent container 120 is loaded in this cycle 505 (step S604), and loading is completed.

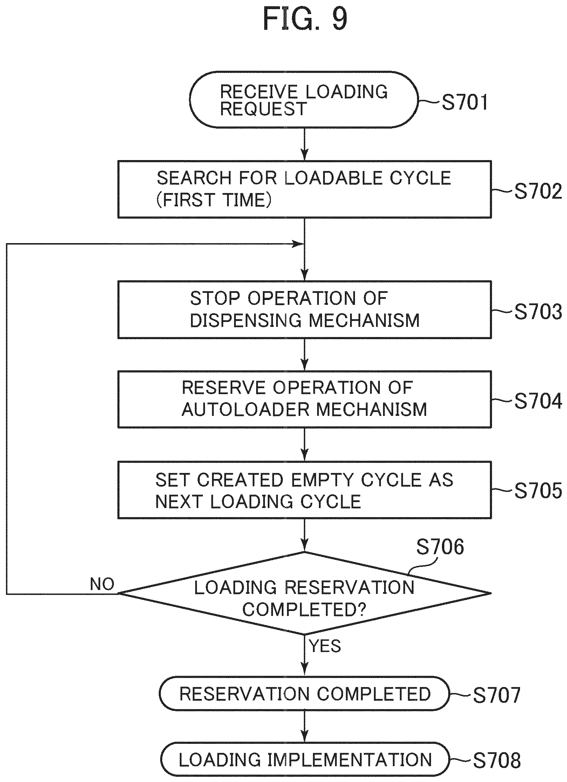

Next, a flow of the reagent registration will be explained using Fig. 9. Fig. 9 is a flowchart in which mechanisms are reserved when any number of reagent containers are loaded.

When a loading request is received (step S701), based on the procedure of Fig. 8 described above, the control unit 114 searches for a loadable cycle of the first time (step S702), reserves stop operation of the first reagent dispensing mechanism 108 and the second reagent dispensing mechanism 109 in a loadable cycle (step S703), and reserves operation of the autoloader mechanism (step S704).

Also, the control unit 114 sets the empty cycle of the second reagent dispensing mechanism 109 created by stopping operation of the first reagent dispensing mechanism 108 in step S703 as a next loadable cycle (step S705).

Next, the control unit 114 determines whether or not loading reservation of all reagents has been completed (step S706). The process is made to proceed to step S707 when it is determined that the reservation has been completed, and the process is returned to step S703 when it is determined that the reservation has not been completed.

Next, the control unit 114 completes reservation of the autoloader mechanism, the reagent disk 104, and respective dispensing mechanisms (step S707), waits a lapse of time, and implements loading operation at the reserved timing (step S708).

Here, loading operation of the present embodiment incurs 10 minutes at maximum for loading 5 pieces of the reagent container 120 into the reagent disk 104. When analysis operation is restarted between loading and unloading, the operator cannot determine whether or not the loading operation is implemented normally, and may feel uneasy whether an instruction is implemented rightly.

Therefore, it is preferable to clearly show when loading is to finish on the display unit 114a. For example, remaining time can be displayed in a portion for expressing the apparatus state of the display unit 114a, and when there is a reagent management screen, time (minutes) left for loading each reagent can be displayed individually. Also, display of the time until completion of loading and so on is not limited only to the display unit 114a displaying a screen for operating the entire apparatus, and various display devices can be used such as a small display disposed in the apparatus and an LED notifying the operator of a situation by the lighting state.

Although the above was on a premise of a case where empty positions of a number equal to or greater than that of the reagent container 120 intended to be loaded beforehand existed in the reagent disk 104, a case where the empty position does not exist naturally occurs.

In such case and when there exist an empty reagent container 120 or a reagent container 120 that is not assumed to be used for the time being in the reagent disk 104, it is preferable that they are unloaded before a loading request for a new reagent container 120 is inputted.

Therefore, when there exists a reagent container 120 having become empty during analysis, it is preferable that the control unit 114 creates an unloading plan for taking out the reagent. With respect to the method for creating the unloading plan and the unloading procedure for unloading the reagent container 120 from the reagent disk 104, operation of the autoloader mechanism is reverse to that of the loading time, a point that the unloaded reagent container 120 is disposed on the reagent tray 107 is different, however the unloading can be implemented basically by the same idea. In each embodiment hereinafter also, this point remains unchanged. Further, although the same reagent tray 107 is used in loading and unloading, it is also possible to use a separate tray in loading and unloading.

Next, the effect of the present embodiment will be explained.

The automatic analyzer 101 of the first embodiment of the present invention described above includes a storage unit that stores a consumable to be used for measuring a sample, the reagent gripping mechanism 110 and the reagent conveyance mechanism 111 that convey the consumable, and the control unit 114 that creates a plan for operating each device in the automatic analyzer 101 including the reagent gripping mechanism 110 and the reagent conveyance mechanism 111 in order to operate the each device, and the control unit 114 plans to operate the reagent gripping mechanism 110 and the reagent conveyance mechanism 111 such that, when the consumable is to be conveyed by the reagent gripping mechanism 110 and the reagent conveyance mechanism 111 during analysis of the sample, an operation of a device to access the storage unit is stopped, and the consumable is conveyed also at a timing at which an operation of the device is stopped, the timing inevitably occurring after the former stop.

When the consumable was the reagent, according to a prior art, in order to load one set of the reagent container 120, it was required to interrupt sample dispensing of two cycles in total namely interruption of sample dispensing caused by stopping the first reagent dispensing mechanism 108 and interruption of sample dispensing caused by stopping the second reagent dispensing mechanism 109. That is to say, it was required to interrupt dispensing by four cycles for 2 sets of the reagent container 120 and by 2n cycles for n sets of the reagent container 120. Here, n is made a natural number of 1 or more, and the upper limit of n is made the number of piece of the reagent container 120 storable in the reagent disk 104.

On the other hand, according to the present invention, the interruption cycle of sample dispensing required for loading n sets of the reagent container 120 becomes (n+1) cycles, and sample dispensing interrupted for loading 2 sets of the reagent container 120 can be suppressed to 3 cycles in the present embodiment. That is to say, equal number of sets of the reagent container 120 can be loaded into the apparatus by (n-1) less number of cycles compared to a prior art. Therefore, occurrence of the unnecessary empty cycle occurring in replacing plural consumables during analysis can be suppressed compared to a prior art, and drop of the throughput of analysis can be suppressed compared to a prior art.

According to control of the control unit 114 described above, when loading of plural consumables is requested at one time, it takes longer time before completing loading of the last reagent compared to a prior art. Furthermore, since measuring work is normally continuing in a time other than a short period of time when loading is implemented, there is a risk that, in watching the apparatus, it is hard to determine whether replacement has finished already or still in the middle.

However, the display unit 114a displaying the state of the automatic analyzer 101 is further provided, the control unit 114 displays the time required for completing conveyance of all consumables requested by the operator on the display unit 114a, thereby it becomes clear that the instructed replacement work is scheduled to be implemented as per the instruction, and therefore the operator can devote oneself to other work at ease and can plan the next work based on the prospect of the completion. Accordingly, efficiency of the analytical work of the operator can be promoted.

Also, the reagent disk 104 and the reagent tray 107 are provided as a storage unit, the reagent disk 104 storing the reagent used for analysis, the reagent tray 107 mounting the reagent loaded into the reagent disk 104 or the reagent unloaded from the reagent disk 104, the reagent gripping mechanism 110 and the reagent conveyance mechanism 111 are for conveying the reagent to either one of the reagent disk 104 or the reagent tray 107, and the device accessing the reagent disk 104 includes the first reagent dispensing mechanism 108 that dispenses R1 out of the reagent and the second reagent dispensing mechanism 109 that dispenses R2. Thus, by applying control of the present invention to the autoloader mechanism that automatically loads and unloads the reagent container 120 instead of the operator, an effect of suppressing drop of the throughput of analysis can be secured largely while reducing the load of the operator.

Also, the first reagent dispensing mechanism 108 and the second reagent dispensing mechanism 109 can access the reagent disk 104 at the same time, and the control unit 114 causes a plan of dispensing operations of the first reagent dispensing mechanism 108 and the second reagent dispensing mechanism 109 to be stopped in order to load or unload, during analysis, one of the reagents into or from the reagent disk 104, and causes another reagent to be loaded or unloaded into or from the reagent disk 104 at a timing at which an operation of the second reagent dispensing mechanism 109 is stopped, the timing inevitably occurring after the stop of the plan for operating the first reagent dispensing mechanism 108. Thus, since conveyance control described above is implemented for an object of the reagent container 120 which is most frequently loaded and unloaded as a consumable, an effect of suppressing drop of the throughput of analysis by interruption of analysis can be secured largely.

### <Second Embodiment>

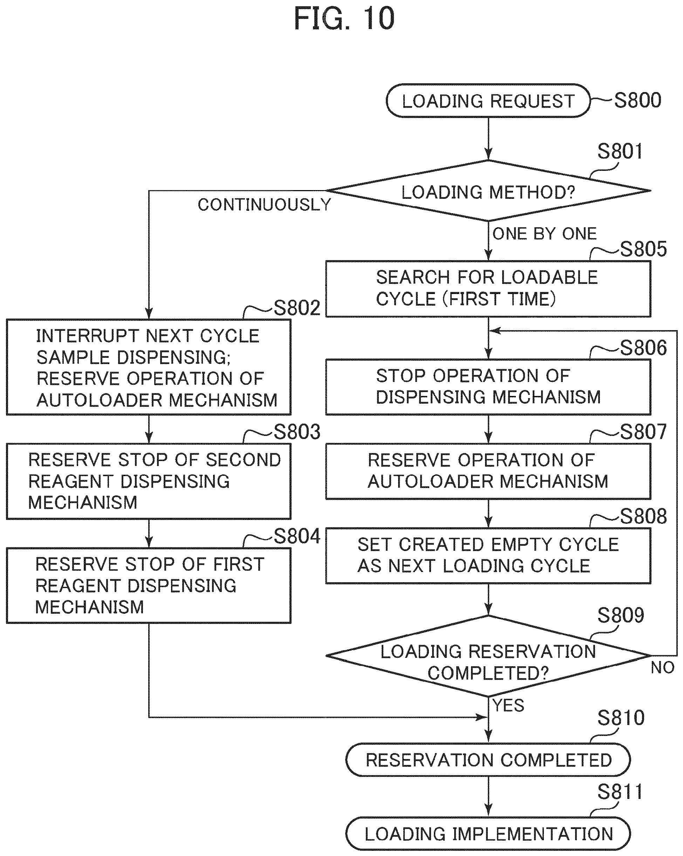

An automatic analyzer of the second embodiment of the present invention will be explained using Fig. 10. Fig. 10 is a flowchart in which, in an automatic analyzer of the second embodiment, mechanisms are reserved when any number of reagent containers are loaded.

In the present embodiment, a configuration same to that of the first embodiment will be marked with a same reference sign, and explanation thereof will be omitted. The same applies also to embodiments hereinafter set forth.

The automatic analyzer of the present embodiment is configured to be capable of switching conveyance control for loading or unloading the reagent container 120 that is in the middle of analysis described in the first embodiment and conveyance control in which, when loading instruction is received from an operator, analysis is interrupted at the time point and all reagents are loaded or unloaded continuously, and to allow an operator to instruct the apparatus which conveyance control is to be implemented.

Conveyance control for interrupting analysis at the time point and conveying the plural reagent containers 120 during analysis has such an advantage that the time from start to finish of loading is short although drop of the throughput of analysis compared to conveyance control using inevitably occurring stop timing as the first embodiment occurs.

In the course of the actual operation, there is a case where completion of loading is preferably prioritized than the throughput such as a case where the remaining amount of the reagent within the apparatus reduces and loading is preferably implemented immediately.

Therefore, it is preferable that the control unit 114 properly uses a plan for loading or unloading the reagent at the inevitably occurring stop timing explained in the first embodiment or a plan for continuing loading or unloading all the reagent specified by the operator.

Also, it is preferable that the plan for loading or unloading the reagent at the inevitably occurring stop timing, or the plan for continuing loading or unloading all the reagent specified by the operator, can be selected for use.

As an example of the selecting means, a dedicated selection button arranged in the apparatus, a selection screen displayed on the display unit 114a, and a switching method by a toggle switch can be cited. In the case of the selection button, it is possible to implement a conveyance method using a stop timing inevitably occurring in being short-pressed, and a conveyance method of continuing loading or unloading all reagents specified by the operator in being long-pressed. Further, although a method of selection according to the pressing method of the button was described, it is also possible to select the conveyance method by the number of times of pressing of the button. Furthermore, a method of preparing two kinds of the button and selecting the conveyance method according to the button having been pressed is also possible.

Also, although the method capable of selecting two kinds of the reagent loading method was described in the present embodiment, when there are three kinds or more of the loading methods, it can be dealt with by preparing a pressing method of the button with respect to each method.

Also, with respect to switching of the conveyance control, it is also possible to enable to switch the conveyance control automatically according to the degree of necessity of the reagent of the reagent container 120 whose loading is instructed by the control unit 114.

Next, a flow of reagent registration in the present embodiment will be explained using Fig. 10.

As illustrated in Fig. 10, first, when a loading request is received (step S801), the control unit 114 determines which of conveyance control of the reagent using the stop timing occurring inevitably and conveyance control of continuing loading or unloading of all reagents specified by the operator (step S801) are to be used. When it is determined to be a case the continuous conveyance control should be implemented, the process is made to proceed to step S802, and the control unit 114 interrupts sample dispensing of the next cycle and collectively implements autoloader mechanism operation reservation of a portion of the number of pieces of the reagent having been reserved (step S802).

Next, the control unit 114 implements mechanism reservation of stop of the autoloader mechanism with respect to the cycle in which the second reagent dispensing mechanism 109 cannot operate due to interference with the autoloader mechanism (step S803), implements mechanism reservation of stop of the first reagent dispensing mechanism 108 with respect to the cycle in which the first reagent dispensing mechanism 108 cannot operate due to interference with the autoloader mechanism (step S804), and the process is made to proceed to step S810.

On the other hand, when it is determined to be a case the conveyance control should be implemented one by one as the first embodiment in step S801, the process is made to proceed to step S805. Since step S805 to step S811 are similarly same respectively to step S702 to step S708 illustrated in Fig. 9, the detail thereof will be omitted.

Other configurations and operations are generally same to those of the automatic analyzer of the first embodiment described above, and the detail thereof will be omitted.

In the automatic analyzer of the second embodiment of the present invention also, an effect generally same to that of the automatic analyzer of the first embodiment described above can be secured.

Also, by properly using a plan for loading or unloading the reagent using an inevitably occurring stop timing and a plan for continuing loading or unloading of all the reagents specified by the operator, the control unit 114 can appropriately switch conveyance control between a case drop of the throughput is preferably suppressed and a case it is impossible to incur the time for conveyance, and therefore various situations can be coped with flexibly.

Also, since it is possible to select which of the plan for loading or unloading the reagent using an inevitably occurring stop timing or the plan for continuing loading or unloading of all the reagents specified by the operator is to be used, it is possible to cope with various situations flexibly by the hands of the operator himself/herself, and improvement of efficiency of analytical work comes to be enabled to be achieved more effectively.

### <Third Embodiment>

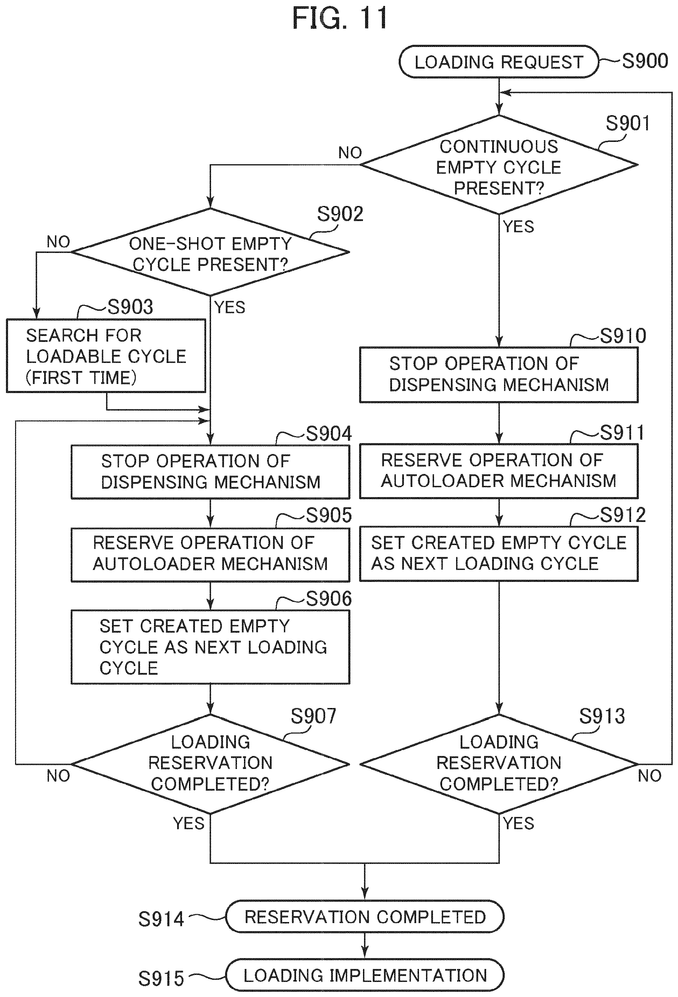

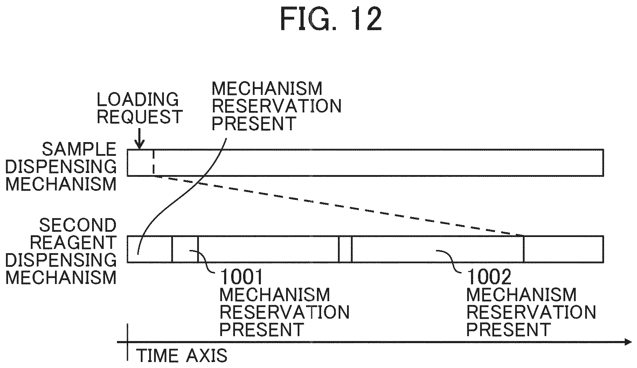

An automatic analyzer of the third embodiment of the present invention will be explained using Fig. 11 and Fig. 12. Fig. 11 is a flowchart in which, in an automatic analyzer of the third embodiment, mechanisms are reserved when any number of reagent containers are loaded. Fig. 12 is a view illustrating a scheduling method of a reagent dispensing mechanism. Also, this Fig. 12 is an example, and changes according to the working condition of the apparatus.

In the first embodiment, control of intentionally making a cycle of implementing loading of the reagent container 120 was applied. In this case, since there is a case that the time until dispensing of R2 after implementing sample dispensing is approximately 5 minutes at the maximum, the time until completion of loading of the reagent container 120 after the operator implements loading request is approximately 10 minutes at the maximum for 5 sets of the reagent container 120.

Therefore, by implementing loading utilizing a timing when continuous empty cycles of equal to or greater than the number of cycles required for the second reagent dispensing mechanism 109 to load the reagent container 120 occur during approximately 5 minutes when mechanism operation has been already planned, the time incurred for loading the reagent container 120 can be reduced.

With respect to an apparatus actually used in a clinical site, it is rare that all reagent dispensing mechanisms are in a state of working with the availability factor of 100%. Therefore there is a case that empty cycles naturally occur in the second reagent dispensing mechanism 109.

Since the time incurred for the first reagent dispensing mechanism 108 to operate after implementing sample dispensing is several seconds, when a cycle where the reagent container 120 can be loaded into the second reagent dispensing mechanism 109 naturally occurs, it becomes possible to interrupt sample dispensing so as to stop the first reagent dispensing mechanism 108 at the same timing to implement loading operation.

Therefore, when loading or unloading of the reagent into or from the reagent disk 104 is requested, the control unit 114 of an automatic analyzer of the present embodiment determines whether a free time, longer than or equal to a time necessary for loading or unloading the reagent, is present in a dispensing plan of the reagent, and when the free time is present, the control unit 114 causes the reagent to be loaded or unloaded within the free time, and when the free time is not present, the control unit 114 stops dispensing operation of the first reagent dispensing mechanism 108 and the second reagent dispensing mechanism 109 and causes the reagent to be loaded and unloaded.

Next, a flow of reagent registration in the present embodiment will be explained using Fig. 11 and Fig. 12.

As illustrated in Fig. 11, first, when a loading request is received (step S900), the control unit 114 searches for whether the empty cycle 1001 where loading of all the reagent container 120 having been requested is continuously possible is present in the time period until the cycle 1002 of the last operation of the second reagent dispensing mechanism 109 planned at present illustrated in Fig. 12 (step S901). When it is determined that the continuous empty cycle 1001 is present, the process is made to proceed to step S910, and a conveyance plan causing loading of all the reagents explained in the second embodiment to continue is created and implemented (step S910 to step S915).

On the other hand, when it is determined that the empty cycle 1001 is not present, the process is made to proceed to step S902. Then, the control unit 114 determines whether a oneshot natural empty cycle having been present originally is present or not is present is determined by the number of the conveyance request without depending on the method explained in the first embodiment and the like (step S902). When it is determined that the empty cycle where loading is possible is present by the number of sets of all of the reagent container 120 having been requested, the process is made to proceed to step S904, and a loading plan for all the reagents is created and implemented (step S904 to step S915).

On the other hand, when it is determined that the empty cycle where loading is possible is present by the number of sets of all of the reagent container 120, the process is made to proceed to step S903, a loading plan for implementing loading of the remaining reagent container 120 as the first embodiment utilizing the empty cycle occurring in loading the reagent container 120 in the empty cycle having naturally occurred is created and implemented (step S903 to step S915).

Since step S904 to step S907 described above are similarly same to step S703 to step S706 illustrated in Fig. 9 respectively and step S910 to step S915 are similarly same to step S703 to step S708 illustrated in Fig. 9 respectively, the detail thereof will be omitted.

Other configurations and operations are generally same to those of the automatic analyzer of the first embodiment described above, and the detail thereof will be omitted.

In the automatic analyzer of the third embodiment of the present invention also, an effect generally same to that of the automatic analyzer of the first embodiment described above can be secured.

Also, when loading or unloading of the reagent into or from the reagent disk 104 is requested, the control unit 114 of an automatic analyzer of the present embodiment determines whether a free time, longer than or equal to a time necessary for loading or unloading the reagent, is present in a dispensing plan of the reagent, when the free time is present, the control unit 114 causes the reagent to be loaded or unloaded within the free time, when the free time is not present, the control unit 114 stops dispensing operation of the first reagent dispensing mechanism 108 and the second reagent dispensing mechanism 109 and causes the reagent to be loaded and unloaded, thereby the number of sample dispensing interrupted only by conveyance namely the number of occurrence of interruption of analysis can be suppressed further, and drop of the throughput can be suppressed more effectively.

### <Fourth Embodiment>

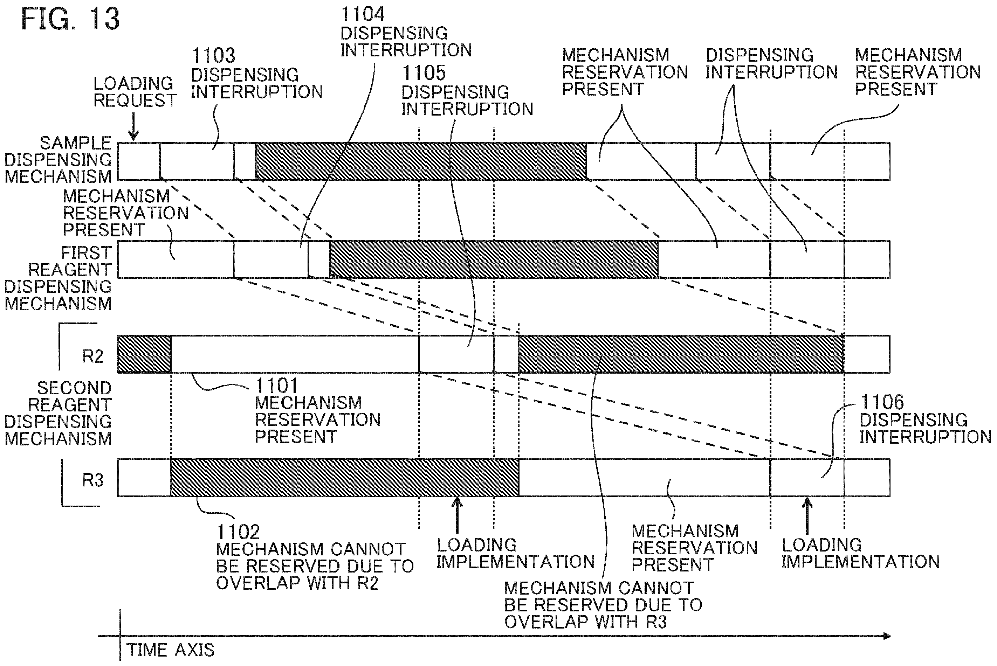

An automatic analyzer of the fourth embodiment of the present invention will be explained using Fig. 13. Fig. 13 is a view illustrating a scheduling method of reagent dispensing mechanisms in an automatic analyzer of the present fourth embodiment.

Respective embodiments described above were aspects where two kinds of the reagent were dispensed using the first reagent dispensing mechanism 108 and the second reagent dispensing mechanism 109.

Here, in the test items in the automatic analyzer used in the actual clinical sites, in addition to such test item using only R1 and R2 as the first embodiment, there is a test item requiring a reagent of the third called a third reagent (will be hereinafter described as R3). That is to say, in general, the test items can be divided into an item using only R1, an item using R1 and R2, an item using R1 and R3, and an item using R1, R2, and R3.

In the present embodiment, explanation will be given on a loading plan of the reagent container 120 during analysis of a case where an item using three kinds of the reagent of R1 to R3 is planned to be tested. In the present embodiment, such case is exemplified where the first reagent dispensing mechanism 108 dispenses R1 and the second reagent dispensing mechanism 109 dispenses R2 and R3.

The flowchart of mechanism reservation is same to that of the first embodiment.

A scheduling method of the first reagent dispensing mechanism 108 and the second reagent dispensing mechanism 109 will be hereinafter explained using Fig. 13. Also, Fig. 13 is only an example of the scheduling method in analyzing a test item utilizing three kids of the reagent, and it is not to say that such scheduling is implemented in all cases.

According to the present embodiment, as illustrated in Fig. 13, the mechanism operation 1101 for R2 and the mechanism operation 1102 for R3 cannot be implemented at the same time. The reason is that both R2 dispensing and R3 dispensing utilize the second reagent dispensing mechanism 109. This is called overlap of the mechanism. In Fig. 13, a portion where mechanism reservation cannot be implemented by overlap of the mechanism is illustrated by hatched lines.

When a loading request comes, similarly to the first embodiment, the control unit 114 interrupts sample dispensing in the cycle 1103 which is for sample dispensing immediately thereafter as illustrated in Fig. 13. By interruption of sample dispensing in the cycle 1103, the interrupted cycle 1104 of the first reagent dispensing mechanism 108 occurs, and the interrupted cycle 1105 for R2 dispensing by the second reagent dispensing mechanism 109 and the interrupted cycle 1106 for R2 dispensing by the second reagent dispensing mechanism 109 also occur. Thus, the free cycle where the reagent container 120 can be loaded comes to occur two times of the cycle 1105 for R2 dispensing and the cycle 1106 for R3 dispensing.

Here, between the cycle 1105 and the cycle 1106, although R3 dispensing is required by sample dispensing prior to the loading request, due to overlap of the mechanisms, R2 dispensing operation has not been reserved because of this R3 dispensing. Also, since R2 dispensing operation has not been reserved, R1 dispensing operation and sample dispensing operation also have not been reserved in the timing of the cycle 1105. Therefore, even when dispensing interruption of the sample and R1 dispensing stopping are not implemented intentionally, the cycle 1105 becomes a timing at which the second reagent can be loaded.

Also, in loading of the reagent container 120 in the cycle 1106, interruption of the first reagent dispensing mechanism 108 comes to be required. In this case, interruption of R1 reagent dispensing and sample dispensing is implemented by a procedure similar to that of the first embodiment.

Other configurations and operations are generally same to those of the automatic analyzer of the first embodiment described above, and the detail thereof will be omitted.

In the automatic analyzer of the fourth embodiment of the present invention also, an effect generally same to that of the automatic analyzer of the first embodiment described above can be secured. Also, according to the present embodiment, even when the test item using three kinds of the reagent has been planned, drop of the throughput can be suppressed.

Further, according to the present embodiment, although a case where two sets of the reagent dispensing mechanism were present was cited, the number of set of the dispensing mechanism is not limited particularly, and any number will do. Also, with respect to usage of two sets of the second reagent dispensing mechanism, any grouping will do such that the first reagent dispensing mechanism 108 implements dispensing of R1 and R2 and the second reagent dispensing mechanism 109 implements R3 dispensing, and so on. A method of using free one at the timing of reagent dispensing will do also.

### <Fifth Embodiment>

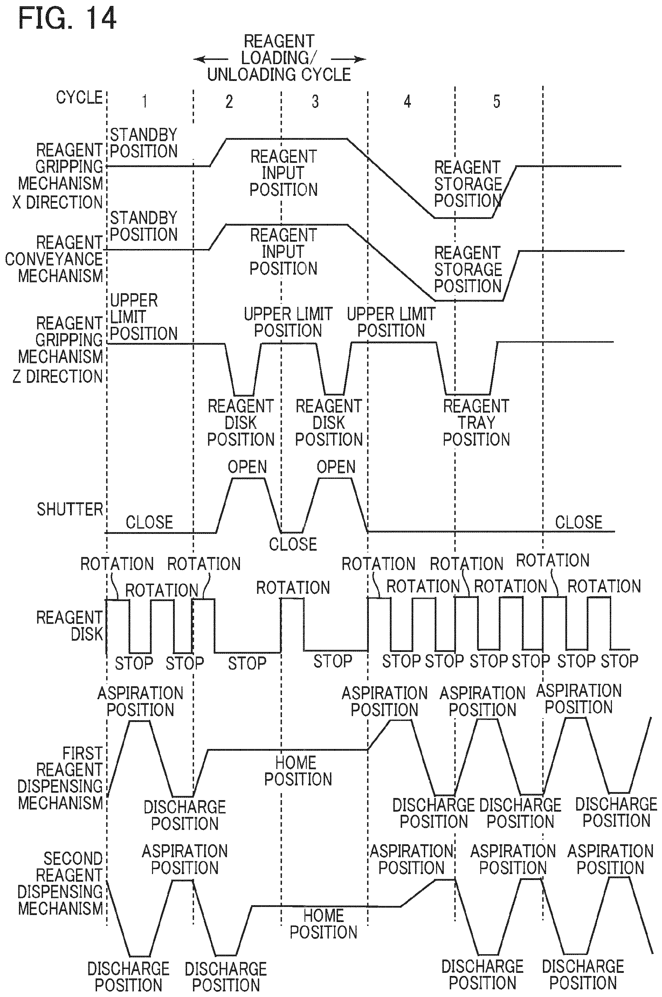

An automatic analyzer of the fifth embodiment of the present invention will be explained using Fig. 14. Fig. 14 is a time chart view in which loading and unloading of reagent containers are performed as a set, which are illustrated in the present fifth embodiment.

In the first embodiment, scheduling of a case where only loading or only unloading of the reagent was implemented was described.

However, when a reagent intended to be unloaded is present in the apparatus, it is preferable to implement loading and unloading as a set irrespective of whether it is during analysis or not. The reason is that the time can be shortened when loading and unloading are implemented at the same time compared to a case of reciprocating many times between the reagent tray 107 and the reagent disk 104.

Therefore, when unloading and loading of the reagent from and into the reagent disk 104 are requested, the control unit 114 of the present embodiment determines whether a free time, longer than or equal to a time necessary for unloading and loading the reagent, is present in a dispensing plan of the reagent. Also, when the free time is present, the control unit 114 causes the reagent to be unloaded and loaded continuously within the free time. On the other hand, when the free time is not present, the control unit 114 causes the reagent to be loaded by causing the dispensing operations of the first reagent dispensing mechanism 108 and the second reagent dispensing mechanism 109 to be stopped, and then causes the reagent to be unloaded.

Also, when unloading and loading of the reagent from and into the reagent disk 104 are requested during analysis, the control unit 114 causes the reagent to be loaded by causing the dispensing operations of the first reagent dispensing mechanism 108 and the second reagent dispensing mechanism 109 to be stopped, and then causes the reagent to be unloaded. On the other hand, when unloading and loading of the reagent are requested while analysis is not implemented, it is preferable to implement unloading and loading of the reagent continuously. While analysis is not implemented means while the apparatus is in a standby state, while the apparatus is in a state of not implementing dispensing operation for the sample and the reagent and waiting for an analysis request, and so on for example.

More specifically, as illustrated in Fig. 14, in a state the reagent gripping mechanism 110 is raised after taking in the reagent container 120 to be loaded to the reagent disk 104 by the autoloader mechanism in the cycle 2, the control unit 114 causes the reagent gripping mechanism 110 to standby at the position.

Thereafter, as illustrated in the third cycle of Fig. 14, the shutter disposed in the input port 105 is closed, the reagent disk 104 is rotated, and the reagent container 120 to be unloaded is moved to the position of the input port 105.

Thereafter, the reagent gripping mechanism 110 is lowered, the reagent container 120 is taken out from the reagent disk 104, the reagent conveyance mechanism 111 is moved, and thereby the reagent container 120 having been taken out is moved to the reagent tray 107.

Other configurations and operations are generally same to those of the automatic analyzer of the first embodiment described above, and the detail thereof will be omitted.

In the automatic analyzer of the fifth embodiment of the present invention also, an effect generally same to that of the automatic analyzer of the first embodiment described above can be secured.

Also, when unloading and loading of the reagent from or into the reagent disk 104 are requested, the control unit 114 determines whether a free time, longer than or equal to a time necessary for unloading and loading the reagent, is present in a dispensing plan of the reagent, when the free time is present, the control unit 114 causes the reagent to be unloaded and loaded continuously within the free time, when the free time is not present, the control unit 114 causes the reagent to be loaded by causing the dispensing operations of the first reagent dispensing mechanism 108 and the second reagent dispensing mechanism 109 to be stopped, and then causes the reagent to be unloaded, thereby the reagent gripping mechanism 110 can be suppressed from moving between the reagent tray 107 and the reagent disk 104 many times, the time incurred for replacement of the reagent container 120 is optimized, and the operation efficiency of the operation as a set of unloading and loading can be improved.

Also, when unloading and loading of the reagent from or into the reagent disk 104 are requested during analysis, the control unit 114 causes the reagent to be loaded by causing the dispensing operations of the first reagent dispensing mechanism 108 and the second reagent dispensing mechanism 109 to be stopped, and then causes the reagent to be unloaded. On the other hand, when unloading and loading of the reagent are requested while analysis is not implemented, it is preferable that unloading and loading of the reagent are implemented continuously.

Here, when sample dispensing is interrupted and loading is implemented only while the autoloader mechanism accesses the reagent disk 104, if loading and unloading are implemented as a set as the present embodiment, there is a risk that the time for interrupting dispensing is doubled. Also, when unloading and loading are implemented continuously utilizing the free cycle naturally made as the third embodiment, the cycle where loading is possible comes to be hardly found. In such case, the time incurred until completion of loading of the reagent container 120 becomes shorter when loading and unloading are implemented separately.

Also, in order to load the reagent container 120, there must be a space in the reagent disk 104. Therefore, when loading and unloading are implemented separately, it is required to automatically unload the reagent container 120 beforehand as the fourth embodiment, the reagent container 120 being intended to be unloaded.

Thus, by implementing loading and unloading separately during analysis and implementing loading and unloading as a set at the time other than that, the time incurred for replacement of the reagent container 120 can be optimized.

### <Sixth Embodiment>

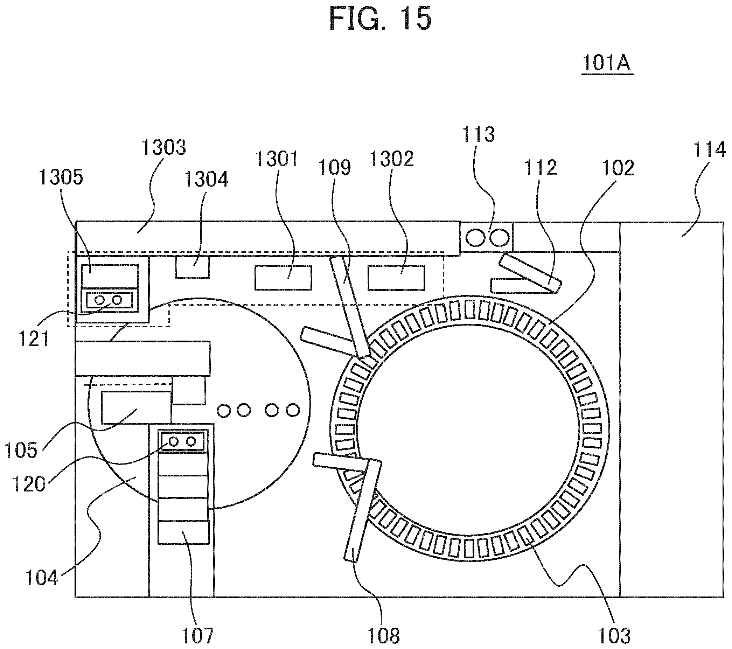

An automatic analyzer of the sixth embodiment of the present invention will be explained using Fig. 15. Fig. 15 is a top view of the automatic analyzer of the present sixth embodiment.

In the first embodiment to the fifth embodiment described above, a case where the consumable was the reagent was described. Here, as an automatic analyzer 101A illustrated in Fig. 15, there is a case where detergent containers 121 are disposed on the apparatus outside the reagent disk 104, the detergent containers 121 storing detergent washing the sample dispensing mechanism 112 and detergent washing the reaction container 103. These detergent containers 121 are conveyed from a detergent tray 1305 to the disposal position of each by a consumable conveyance mechanism 1303 and a consumable gripping mechanism 1304.

When a disposal position 1301 of the detergent for the reaction container and a disposal position 1302 for the detergent for the sample dispensing mechanism are disposed as Fig. 5, since operation of the consumable conveyance mechanism 1303 and the consumable gripping mechanism 1304 and operation of the second reagent dispensing mechanism 109 possibly interfere with each other, it is required to stop the second reagent dispensing mechanism 109 for a certain period of time.

Since the second reagent dispensing mechanism 109 implements operation for R2 dispensing and operation for R3 dispensing, when sample dispensing is interrupted once, there occur timings for stopping the second reagent dispensing mechanism two times. Therefore, when one detergent can be loaded by stopping the second reagent dispensing mechanism 109 by one cycle, loading of two detergents is enabled by interruption of sample dispensing of once.

Other configurations and operations are generally same to those of the automatic analyzer of the first embodiment described above, and the detail thereof will be omitted.

In the automatic analyzer of the sixth embodiment of the present invention also, an effect generally same to that of the automatic analyzer of the first embodiment described above can be secured.

Further, although a case where the mechanism for loading the reagent container 120 and the mechanism for conveying the detergent container 121 was separate was exemplified in the present embodiment, a mechanism for conveying the reagent container 120 and the detergent container 121 may be the same one. In the case, the reagent tray 107 and the detergent tray 1305 can be integrated into one without being separated.

Also, according to the present embodiment, such case was exemplified that one each of the detergent for the sample dispensing mechanism and the detergent for the reaction container could be disposed. Since there are two sets of the sample dispensing mechanism in two systems of the automatic analyzer, there is a case where two detergents for sample dispensing mechanism can be disposed and two bottles of the detergent for the reaction container can be disposed as a spare. In such case also, loading can be implemented in a similar manner.

Further, although detergent was exemplified for a consumable in the present embodiment, the present invention can be applied suitably, for example, to a case where there exists a mechanism required to be temporarily stopped other than a mechanism directly involved in conveyance in order to load a new consumable or in order to unload a consumable having been consumed as a case where the consumable conveyance mechanism 1303 and the consumable gripping mechanism 1304 interfere with the second reagent dispensing mechanism 109 while conveying the consumable with respect to the consumable disposed outside the reagent disk 104.

With respect to such consumable, for example, detergent for washing the reagent dispensing mechanisms 108 and 109, the sample dispensing mechanism 112, the reaction container 103, and the like, a disposable reaction container, a dispensing chip for dispensing a sample, and so on can be cited.

### <Others>

Also, the present invention is not limited to the embodiments described above, and various modifications are included therein. The embodiments described above were explained in detail for the purpose of easy understanding of the present invention, and are not necessarily to be limited to those including all configurations explained.

Also, a part of a configuration of an embodiment can be substituted to a configuration of another embodiment, and a configuration of an embodiment can be added with a configuration of another embodiment. Further, with respect to a part of a configuration of each embodiment, it is also possible to effect addition of another configuration, deletion, and substitution.

### List of Reference Signs

101, 101A Automatic analyzer
102 Reaction disk
103 Reaction container
104 Reagent disk (First reagent storage unit)
104a Aspiration port
105 Input port
106 Standby position
107 Reagent tray (Second reagent storage unit)
108 First reagent dispensing mechanism (First dispensing unit)
109 Second reagent dispensing mechanism (Second dispensing unit)
110 Reagent gripping mechanism (Conveyance unit)
111 Reagent conveyance mechanism (Conveyance unit)
112 Sample dispensing mechanism
113 Sample aspiration position
114 Control unit
114a Display unit
115a Light source
115b Spectrophotometer
117 Sample conveyance mechanism
118 Rack
119 Sample container
120 Reagent container
121 Detergent container
401 Timing of performing sample dispensing
402 Timing of performing R2, R3 reagents dispensing
501 Sample dispensing cycle to be interrupted to make timing of performing first reagent loading
502A, 503 Cycle of stopping operation of first reagent dispensing mechanism in order to perform first reagent loading
502B Cycle of performing first reagent loading
504 Liquid dispensing cycle to be interrupted
505 Inevitably occurring cycle in which second reagent loading can be performed
506 Cycle of stopping operation of first reagent dispensing mechanism in order to perform second reagent loading
1001 Naturally occurring empty cycle in which reagent loading can be performed
1002 Cycle with last mechanism reservation at the time of receiving loading request
1101 Operation of second reagent dispensing mechanism in order to dispense second reagent
1102 Operation of second reagent dispensing mechanism in order to dispense third reagent
1103 Sample dispensing cycle to be interrupted to make timing of performing first reagent loading
1104 Cycle of stopping operation of first reagent dispensing mechanism in order to perform first reagent loading
1105, 1106 Cycle of performing first reagent loading
1301 Installation position of detergent for reaction containers
1302 Installed position of detergent for sample dispensing mechanisms
1303 Consumable conveyance mechanism
1304 Consumable gripping mechanism
1305 Detergent tray

## Claims

1. An automatic analyzer that is configured to analyse a sample, the automatic analyzer comprising:
a storage unit including a reagent disk (104) and a reagent tray (107) that is configured to store reagent containers (120) to be used for measuring the sample;
a conveyance unit (111) that is configured to convey the reagent container (120) for loading or unloading the reagent container (120) into and from the reagent disk (104); and
a control unit (114) that is configured to schedule and control loading and unloading of at least one reagent container (120) into and from the reagent disk (104);
a first reagent dispensing mechanism (108) configured to dispense a first reagent from the reagent container (120) to a reaction container (103);
a second reagent dispensing mechanism (109) configured to dispense a second reagent from the reagent container (120) to a reaction container (103), the first reagent and the second reagent being among the reagents;
a sample dispensing mechanism (112);
wherein the first and second dispensing mechanisms (108, 109) are configured access the inside of reagent disk (104) and wherein the first reagent dispensing mechanism (108) and the second reagent dispensing mechanism (109) are configured to be capable of simultaneously accessing the reagent disk (104),
wherein when a loading request for a reagent container (120) is received,
the control unit (114) is configured to operate the automatic analyzer such that when the reagent container (120) is to be loaded or unloaded by the conveyance unit during analysis of the sample:
- sample dispensing is interrupted for a sample in question in a first cycle (501) such that dispensing the first and the second reagent to the sample in question in subsequent cycles (502A, 502B) becomes unnecessary;
- an operation of the first dispensing unit (108) is stopped at a timing of a second cycle (502A) for dispensing the first reagent (R1) to the sample in question;
- an operation of the second dispensing unit (109) is stopped at a timing of a third cycle (502B) for dispensing the second reagent (R2) to the sample in question;
- a rotation operation of the reagent disk (104) is stopped as well at the timing of the third cycle (502B) at which the operation of the second dispensing unit (109) is stopped;
- a loading operation of the reagent container (120) is implemented at the timing of the third cycle (502B) at which the rotation operation of the reagent disk (104) is stopped;
- an operation of the first dispensing unit (108) is stopped for a second time in a fourth cycle (503) at the timing of the third cycle at which the rotation operation of the reagent disk (104) is stopped, the timing of the fourth cycle (503) inevitably occurring after the former stop at the timing of the second cycle (502A); and
- a further reagent container (120) is loaded or unloaded also at a timing of a fifth cycle (505) at which an operation of the second first dispensing unit (109) is stopped inevitably after stopping the first dispensing unit (108) for a second time in the fourth cycle (503).

2. The automatic analyzer according to claim 1, further comprising a display unit (114a) that is configured to display a state of the automatic analyzer, wherein
the control unit (114) is configured to display, on the display unit (114a), a time necessary for completing conveyance of all the reagent containers (120) that an operator has requested.

3. The automatic analyzer according to claim 1, comprising, as the storage unit, said reagent disk (104) a first reagent storage unit that stores reagent containers (120) to be used for analysis, and a said reagent tray (107) as a second reagent storage unit on which a reagent container (120) to be loaded in the reagent disk (104) or the reagent container (120) to be unloaded from the first reagent storage unit (104) is placed, wherein:
the conveyance unit (111) is configured to convey the reagent container (120) to either the reagent disk (104) or the second reagent storage unit (107).

4. The automatic analyzer according to claim 1, wherein
the control unit (114) is configured to properly use a plan for loading or unloading the reagent containers (120) at the inevitably occurring stop timing, or a plan for continuously loading or unloading all the reagent containers (120) specified by an operator.

5. The automatic analyzer according to claim 1, wherein
a plan for loading or unloading the reagent container (120) at the inevitably occurring stop timing, or a plan for continuously loading or unloading all the reagent containers (120) specified by an operator, can be selected for use.

6. The automatic analyzer according to claim 3, wherein
when loading or unloading of the reagent container (120) into or from the first reagent storage unit (104) is requested, the control unit (114) is configured to determine whether a free time, longer than or equal to a time necessary for loading or unloading the reagent container (120), is present in a dispensing plan of the reagent, and when the free time is present, the control unit (114) is configured to cause the reagent container (120) to be loaded or unloaded within the free time, and when the free time is not present, the control unit (114) is configured to cause the reagent container (120) to be loaded by causing the dispensing operations of the first dispensing unit (108) and the second dispensing unit (109) to be stopped, and to then cause the reagent container (120) to be unloaded.

7. The automatic analyzer according to claim 1, wherein
when unloading and loading of the reagent container (120) from or into the first reagent storage unit (104) are requested, the control unit (114) is configured to determine whether a free time, longer than or equal to a time necessary for unloading and loading the reagent container (120), is present in a dispensing plan of the reagent container (120), so that: when the free time is present, the control unit (114) is configured to cause the reagent container (120) to be unloaded and loaded continuously within the free time; and when the free time is not present, the control unit (114) is configured to cause the reagent to be loaded by causing the dispensing operations of the first dispensing unit (108) and the second dispensing unit (109) to be stopped, and to then cause the reagent container (120) to be unloaded.

## Patentansprüche

1. Automatischer Analysator, der dazu ausgelegt ist, eine Probe zu analysieren, wobei der automatische Analysator umfasst:
Eine Speichereinheit mit einer Reagenzscheibe (104) und einem Reagenztablett (107), die dazu ausgelegt ist, Reagenzbehälter (120) zu speichern, die zur Messung der Probe verwendet werden sollen;
eine Fördereinheit (111), die dazu ausgelegt ist, den Reagenzbehälter (120) zum Laden oder Entladen des Reagenzbehälters (120) in die und aus der Reagenzscheibe (104) zu fördern; und
eine Steuereinheit (114), die dazu ausgelegt ist, das Laden und Entladen von mindestens einem Reagenzbehälter (120) in die und aus der Reagenzscheibe (104) zu planen und zu steuern;
eine erste Reagenzdosiereinrichtung (108), die dazu ausgelegt ist, ein erstes Reagenz aus dem Reagenzbehälter (120) zu einem Reaktionsbehälter (103) zu dosieren;
eine zweite Reagenzdosiereinrichtung (109), die dazu ausgelegt ist, ein zweites Reagenz aus dem Reagenzbehälter (120) zu einem Reaktionsbehälter (103) zu dosieren, wobei das erste Reagenz und das zweite Reagenz zu den Reagenzien gehören;
eine Probendosiereinrichtung (112);
wobei die erste und zweite Dosiereinrichtung (108, 109) dazu ausgelegt sind, auf das Innere der Reagenzscheibe (104) zuzugreifen, und wobei die erste Reagenzdosiereinrichtung (108) und die zweite Reagenzdosiereinrichtung (109) konfiguriert sind, um gleichzeitig auf die Reagenzscheibe (104) zugreifen zu können, wobei
die Steuereinheit (114) dazu ausgelegt ist, wenn eine Ladeanforderung für einen Reagenzbehälter (120) empfangen wird, den automatischen Analysator so zu betreiben, dass wenn der Reagenzbehälter (120) durch die Fördereinheit während der Analyse der Probe geladen oder entladen werden soll:
- die Probendosierung für eine betreffende Probe in einem ersten Zyklus (501) unterbrochen wird, so dass die Dosierung des ersten und des zweiten Reagenzes zu der betreffenden Probe in nachfolgenden Zyklen (502A, 502B) unnötig wird;
- ein Betrieb der ersten Dosiereinheit (108) zu einem Zeitpunkt eines zweiten Zyklus (502A) zum Dosieren des ersten Reagenzes (R1) zu der betreffenden Probe gestoppt wird;
- ein Betrieb der zweiten Dosiereinheit (109) zu einem Zeitpunkt eines dritten Zyklus (502B) zum Dosieren des zweiten Reagenzes (R2) zu der betreffenden Probe gestoppt wird;
- ein Rotationsbetrieb der Reagenzscheibe (104) ebenfalls zu dem Zeitpunkt des dritten Zyklus (502B) gestoppt wird, zu dem der Betrieb der zweiten Dosiereinheit (109) gestoppt wird;
- ein Ladevorgang des Reagenzbehälters (120) zu dem Zeitpunkt des dritten Zyklus (502B) durchgeführt wird, zu dem der Rotationsbetrieb der Reagenzscheibe (104) gestoppt wird;
- ein Betrieb der ersten Dosiereinheit (108) ein zweites Mal in einem vierten Zyklus (503) zu dem Zeitpunkt des dritten Zyklus gestoppt wird, zu dem der Rotationsbetrieb der Reagenzscheibe (104) gestoppt wird, wobei der Zeitpunkt des vierten Zyklus (503) unvermeidlich nach dem früheren Stopp zu dem Zeitpunkt des zweiten Zyklus (502A) auftritt; und
- ein weiterer Reagenzbehälter (120) auch zu einem Zeitpunkt eines fünften Zyklus (505) geladen oder entladen wird, zu dem ein Betrieb der zweiten ersten Dosiereinheit (109) unvermeidlich nach dem zweiten Stoppen der ersten Dosiereinheit (108) in dem vierten Zyklus (503) gestoppt wird.

2. Automatischer Analysator nach Anspruch 1, weiter umfassend eine Anzeigeeinheit (114a), die dazu ausgelegt ist, einen Zustand des automatischen Analysators anzuzeigen, wobei
die Steuereinheit (114) dazu ausgelegt ist, auf der Anzeigeeinheit (114a) eine Zeit anzuzeigen, die zum Abschließen der Förderung aller Reagenzbehälter (120) erforderlich ist, die ein Bediener angefordert hat.

3. Automatischer Analysator nach Anspruch 1, umfassend als die Speichereinheit die genannte Reagenzscheibe (104) als eine erste Reagenzspeichereinheit, die Reagenzbehälter (120) zur Verwendung für die Analyse speichert, und das genannte Reagenztablett (107) als eine zweite Reagenzspeichereinheit, auf der ein Reagenzbehälter (120), der in die Reagenzscheibe (104) geladen werden soll, oder der Reagenzbehälter (120), der aus der ersten Reagenzspeichereinheit (104) entladen werden soll, platziert wird, wobei:
die Fördereinheit (111) dazu ausgelegt ist, den Reagenzbehälter (120) entweder zu der Reagenzscheibe (104) oder zu der zweiten Reagenzspeichereinheit (107) zu fördern.

4. Automatischer Analysator nach Anspruch 1, wobei
die Steuereinheit (114) dazu ausgelegt ist, ordnungsgemäß einen Plan zum Laden oder Entladen der Reagenzbehälter (120) zu dem unvermeidlich auftretenden Stoppzeitpunkt oder einen Plan zum kontinuierlichen Laden oder Entladen aller von einem Bediener spezifizierten Reagenzbehälter (120) zu verwenden.

5. Automatischer Analysator nach Anspruch 1, wobei
ein Plan zum Laden oder Entladen des Reagenzbehälters (120) zu dem unvermeidlich auftretenden Stoppzeitpunkt oder ein Plan zum kontinuierlichen Laden oder Entladen aller von einem Bediener spezifizierten Reagenzbehälter (120) zur Verwendung ausgewählt werden kann.

6. Automatischer Analysator nach Anspruch 3, wobei
wenn das Laden oder Entladen des Reagenzbehälters (120) in die oder aus der ersten Reagenzspeichereinheit (104) angefordert wird, die Steuereinheit (114) dazu ausgelegt ist, zu bestimmen, ob eine freie Zeit, die länger als oder gleich einer zum Laden oder Entladen des Reagenzbehälters (120) erforderlichen Zeit ist, in einem Dosierplan des Reagenzes vorhanden ist, und wenn die freie Zeit vorhanden ist, ist die Steuereinheit (114) konfiguriert, um zu bewirken, dass der Reagenzbehälter (120) innerhalb der freien Zeit geladen oder entladen wird, und wenn die freie Zeit nicht vorhanden ist, ist die Steuereinheit (114) konfiguriert, um zu bewirken, dass der Reagenzbehälter (120) geladen wird, indem sie bewirkt, dass die Dosiervorgänge der ersten Dosiereinheit (108) und der zweiten Dosiereinheit (109) gestoppt werden, und dann zu bewirken, dass der Reagenzbehälter (120) entladen wird.

7. Automatischer Analysator nach Anspruch 1, wobei
wenn das Entladen und Laden des Reagenzbehälters (120) aus oder in die erste Reagenzspeichereinheit (104) angefordert werden, die Steuereinheit (114) dazu ausgelegt ist, zu bestimmen, ob eine freie Zeit, die länger als oder gleich einer zum Entladen und Laden des Reagenzbehälters (120) erforderlichen Zeit ist, in einem Dosierplan des Reagenzbehälters (120) vorhanden ist, so dass: wenn die freie Zeit vorhanden ist, die Steuereinheit (114) dazu ausgelegt ist, zu bewirken, dass der Reagenzbehälter (120) kontinuierlich innerhalb der freien Zeit entladen und geladen wird; und wenn die freie Zeit nicht vorhanden ist, die Steuereinheit (114) dazu ausgelegt ist, zu bewirken, dass das Reagenz geladen wird, indem sie bewirkt, dass die Dosiervorgänge der ersten Dosiereinheit (108) und der zweiten Dosiereinheit (109) gestoppt werden, und dann zu bewirken, dass der Reagenzbehälter (120) entladen wird.

## Revendications

1. Analyseur automatique qui est configuré pour analyser un échantillon, l'analyseur automatique comprenant :
une unité de stockage incluant un disque (104) de réactifs et un plateau (107) de réactifs qui est configurée pour stocker des récipients (120) de réactifs destinés à être utilisés pour mesurer l'échantillon ;
une unité (111) de transport qui est configurée pour transporter le récipient (120) de réactif pour charger ou décharger le récipient (120) de réactif dans et depuis le disque (104) de réactifs ; et
une unité (114) de commande qui est configurée pour programmer et commander le chargement et le déchargement d'au moins un récipient (120) de réactif dans et depuis le disque (104) de réactifs ;
un premier mécanisme (108) de distribution de réactif configuré pour distribuer un premier réactif depuis le récipient (120) de réactif dans un récipient (103) de réactif ;
un deuxième mécanisme (109) de distribution de réactif configuré pour distribuer un deuxième réactif depuis le récipient (120) de réactif dans un récipient (103) de réactif, le premier réactif et le deuxième réactif étant parmi les réactifs ;
un mécanisme (112) de distribution d'échantillon ;
dans lequel les premier et deuxième mécanismes (108, 109) de distribution sont configurés pour accéder à l'intérieur du disque (104) de réactifs et dans lequel le premier mécanisme (108) de distribution de réactif et le deuxième mécanisme (109) de distribution de réactif sont configurés pour être aptes à accéder simultanément au disque (104) de réactifs,
dans lequel
lorsqu'une demande de chargement pour un récipient (120) de réactif est reçue,
l'unité (114) de commande est configurée pour faire fonctionner l'analyseur automatique de telle façon que, lorsque le récipient (120) de réactif doit être chargé ou déchargé par l'unité de transport lors d'une analyse de l'échantillon :
- la distribution d'échantillon est interrompue pour un échantillon en question dans un premier cycle (501) de telle sorte qu'une distribution du premier et du deuxième réactif dans l'échantillon en question dans des cycles suivants (502A, 502B) devient inutile ;
- une opération de la première unité (108) de distribution est stoppée à un moment d'un deuxième cycle (502A) pour distribuer le premier réactif (R1) dans l'échantillon en question ;
- une opération de la deuxième unité (109) de distribution est stoppée à un moment d'un troisième cycle (502B) pour distribuer le deuxième réactif (R2) dans l'échantillon en question ;
- une opération de rotation du disque (104) de réactifs est stoppée également au moment du troisième cycle (502B) auquel l'opération de la deuxième unité (109) de distribution est stoppée ;
- une opération de chargement du récipient (120) de réactif est mise en œuvre au moment du troisième cycle (502B) auquel l'opération de rotation du disque (104) de réactifs est stoppée ;
- une opération de la première unité (108) de distribution est stoppée une deuxième fois dans un quatrième cycle (503) au moment du troisième cycle auquel l'opération de rotation du disque (104) de réactifs est stoppée, le moment du quatrième cycle (503) survenant inévitablement après l'arrêt précédent au moment du deuxième cycle (502A) ; et
- un autre récipient (120) de réactif est chargé ou déchargé également à un moment d'un cinquième cycle (505) auquel une opération de la deuxième unité (109) de distribution est stoppée inévitablement après l'arrêt de la première unité (108) de distribution une deuxième fois dans le quatrième cycle (503).

2. Analyseur automatique selon la revendication 1, comprenant en outre une unité (114a) d'affichage qui est configurée pour afficher un état de l'analyseur automatique, dans lequel
l'unité (114) de commande est configurée pour afficher, sur l'unité (114a) d'affichage, un moment nécessaire pour terminer le transport de tous les récipients (120) de réactifs qu'un opérateur a demandé.

3. Analyseur automatique selon la revendication 1, comprenant, comme l'unité de stockage, ledit disque (104) de réactifs comme une première unité de stockage de réactifs qui stocke des récipients (120) de réactifs devant être utilisés pour une analyse et un dit plateau (107) de réactifs comme une deuxième unité de stockage de réactifs sur laquelle un récipient (120) de réactif devant être chargé dans le disque (104) de réactifs ou le récipient (120) de réactif devant être déchargé de la première unité (104) de stockage de réactifs est placé, dans lequel ;
l'unité (111) de transport est configurée pour transporter le récipient (120) de réactif jusqu'à soit le disque (104) de réactifs, soit la deuxième unité (107) de stockage de réactifs.

4. Analyseur automatique selon la revendication 1, dans lequel
l'unité (114) de commande est configurée pour utiliser de façon appropriée un plan pour le chargement ou le déchargement des récipients (120) de réactifs au moment de l'arrêt survenant inévitablement, ou un plan pour le chargement ou le déchargement en continu de tous les récipients (120) de réactifs spécifiés par un opérateur.

5. Analyseur automatique selon la revendication 1, dans lequel
un plan pour le chargement ou le déchargement du récipient (120) de réactif au moment de l'arrêt survenant inévitablement, ou un plan pour le chargement ou le déchargement en continu de tous les récipients (120) de réactifs spécifiés par un opérateur, peut être sélectionné pour une utilisation.

6. Analyseur automatique selon la revendication 3, dans lequel
lorsqu'un chargement ou un déchargement du récipient (120) de réactif dans ou depuis la première unité (104) de stockage de réactifs est demandé, l'unité (114) de commande est configurée pour déterminer si un moment libre, plus long que ou égal à un moment nécessaire pour charger ou décharger le récipient (120) de réactif, est présent dans un plan de distribution du réactif, et lorsque le moment libre est présent, l'unité (114) de commande est configurée pour amener le récipient (120) de réactif à être chargé ou déchargé dans le moment libre, et lorsque le moment libre n'est pas présent, l'unité (114) de commande est configurée pour amener le récipient (120) de réactif à être chargé en amenant les opérations de distribution de la première unité (108) de distribution et de la deuxième unité (109) de distribution à être stoppées, et ensuite à amener le récipient (120) de réactif à être déchargé.

7. Analyseur automatique selon la revendication 1, dans lequel
lorsqu'un déchargement et un chargement du récipient (120) de réactif depuis ou dans la première unité (104) de stockage de réactifs sont demandés, l'unité (114) de commande est configurée pour déterminer si un moment libre, plus long que ou égal à un moment nécessaire pour décharger et charger le récipient (120) de réactif, est présent dans un plan de distribution du récipient (120) de réactif, de telle sorte que : lorsque le moment libre est présent, l'unité (114) de commande est configurée pour amener le récipient (120) de réactif à être déchargé et chargé en continu dans le temps libre ; et lorsque le moment libre n'est pas présent, l'unité (114) de commande est configurée pour amener le réactif à être chargé en amenant les opérations de distribution de la première unité (108) de distribution et de la deuxième unité (109) de distribution à être stoppées, et ensuite à amener le récipient (120) de réactif à être déchargé.
